# EUROPEAN PATENT APPLICATION

(11) **EP 4 521 176 A1**
(43) Date of publication of application: **12.03.2025**
(21) Application number: 23195435.5
(22) Date of filing: 05.09.2023
(51) Int. Cl.: G05B 17/02, G05B 23/02

(54) **A METHOD AND SYSTEM FOR MONITORING AT LEAST ONE CHEMICAL PLANT**

(71) Applicant: BASF SE, 67056 Ludwigshafen am Rhein (DE)
(72) Inventor: Pack, Robert, 67061 Ludwigshafen am Rhein (DE); Engel, Daniel, 67056 Ludwigshafen am Rhein (DE); Beckert, Verena, 524002, Zhanjiang (CN); Becker, Markus Bernhardt, 67061 Ludwigshafen am Rhein (DE)
(74) Representative: Eisenführ Speiser

(57) **Abstract**

A method of monitoring at least one chemical plant (100) is provided. The chemical plant (100) comprises a plurality of unit operations. The chemical plant (100) together with the unit operations are mapped to a graph structure (110) having a plurality of vertices and edges coupled to adjacent vertices. At least one model (200) is associated to at least one of the unit operations and the associated vertices. The model (200) requires at least one input. It is determined which data sources and/or parameters are available in the graph structure (110). It is determined which of the models (200) requires the available data sources and/or parameters. Those models for which the required input is available are automatically deployed.

## Description

### FIELD OF THE INVENTION

The present invention relates to a method and a system for monitoring at least one chemical plant.

### BACKGROUND OF THE INVENTION

Chemical production is a highly complex environment. Especially, when two or more production plants are involved. Chemical plants typically include multiple assets to produce the chemical product. Multiple feeds of pure components or mixtures are present and at various stages energy is provided or withdrawn. Multiple sensors are distributed in such plants for monitoring and control purposes and collect data. As such, chemical production is a data heavy environment. Thus, monitoring and controlling interconnected plants is challenging.

In process engineering flowsheet simulators include graph structures to simulate chemical plants. Models in such flowsheet simulators are typically built to solve a given problem and can not be transferred to other problems easily. Specifically, such simulators are static and cannot be easily adjusted. Additionally, the model design is cumbersome and time consuming. Specifically, each block / node used in a flowsheet model hast a largely fixed, though potentially parametrized, number of unknowns, and thus requires a specific number of specifications or additional constraints / equations.

Existing modelers are static and generate a set of equations that are tailored to the user specified problem. These models are not dynamic in the sense that they are automatically adaptable to e.g. different optimization problems. Additionally, interdependencies between process components or multiple plants are difficult to capture and lead to less robust results.

WO 2021/156484 A2 discloses a method for generating a model representation of a process network based on a graph structure.

The object of the present invention relates to provide a system and a method for monitoring and/or controlling assets or equipment in a chemical plant with improved monitoring capabilities.

### SUMMARY OF THE INVENTION

According to an aspect a method for monitoring at least one chemical plant comprising a plurality of unit operations is provided. The chemical plant together with the unit operations are mapped to a graph structure. The graph structure comprises a plurality of vertices associated to the unit operations and edges coupling vertices. An edge can relate to a physico-chemical quantity exchanged between two vertices (two unit operations). A model describing the unit operation is provided for at least one of the unit operations. The model has at least one input. If this input can be measured or determined based on information and/or parameter from the chemical plant, than the model is deployed based on the input. The graph structure is searched for available data or parameters. It is determined which models can be deployed with the available data and those models are than deployed. The model can be a template model, which can relate to a basic model with some boundary conditions.

According to example an observability analysis of the graph structure is performed to determine which data or parameter can be measured or can be derived. The outcome of the observability analysis can be used to determine which models can be deployed. Once, the data and/or parameter are available the corresponding model can be deployed and the behavior of the unit operation to be modelled can be monitored. Hence, an automatic model deployment can be achieved. The available data sources can be considered as signals in the graph structure. One of the unit operations which provide the data source can then be considered as a signal provider, i.e. the vertex associated to this unit operation.

The model ortemplate model can describe which data or parameter under which boundary conditions it requires to deploy the model. Alternatively, a corresponding model description can be associated to the model.

Instead of starting or initiation the model deployment and then searching of the required data or parameter, the available data or parameter are determined and then those models are deployed automatically for which the required data or parameter are available.

The models can be used to determine key performance indicators KPI of the unit operation. The KPI over time can be used to monitor the deterioration of the unit operation.

The model of the unit operation can be run on a vertex associated to the unit operation.

The edges in the graph structure can relate to a physical-chemical quantity. The physical-chemical quantities can comprise variables and/or constraints.

The physical-chemical quantity is observable when it can be measured in the chemical plant, can be calculated from equations related to the vertex or may be derived from other measurements.

According to a further aspect, a system for monitoring at least one chemical plant comprising a plurality of unit operations is provided. The chemical plant together with the unit operations are mapped to a graph structure having a plurality of vertices and edges coupled to the vertices. At least one model is associated to at least one of the unit operations and the associated vertices. The model requires at least one output. The availability of data sources and/or parameters is determined in the graph structure. It is determined which models require the available data sources and/or parameters. Those models for which it has been determined that the available data sources or parameters are available can be automatically deployed if the required input is available.

According to a further aspect, a computer program monitoring at least one chemical plant is provided. The program comprises code means for causing the system to execute a method of monitoring at least one chemical plant when the program is run on a computer controlling the system.

It shall be understood that the aspects described above and specifically the method of claim 1, the system of claim 7, and the computer program of claim 8 have similar and/or identical preferred embodiments in particular as defined in the dependent claims.

It shall be understood that a preferred aspects of the present invention can also be any combination of the dependent claims or above embodiments with a respective independent claim.

These and other aspects of the present invention will be apparent from and elucidated with reference to the embodiments described hereafter.

### BRIEF DESCRIPTION OF THE DRAWINGS

- Fig. 1: shows a simplified flow chart of chemical plant,
- Fig. 2: shows a graph structure of the first plant,
- Figs.: 3A and 3B show an alternative graph structure the graph structure, and
- Fig. 4: shows a flow chart of a template model deployment during a monitoring of a chemical plant.

### DETAILED DESCRIPTION OF EMBODIMENTS

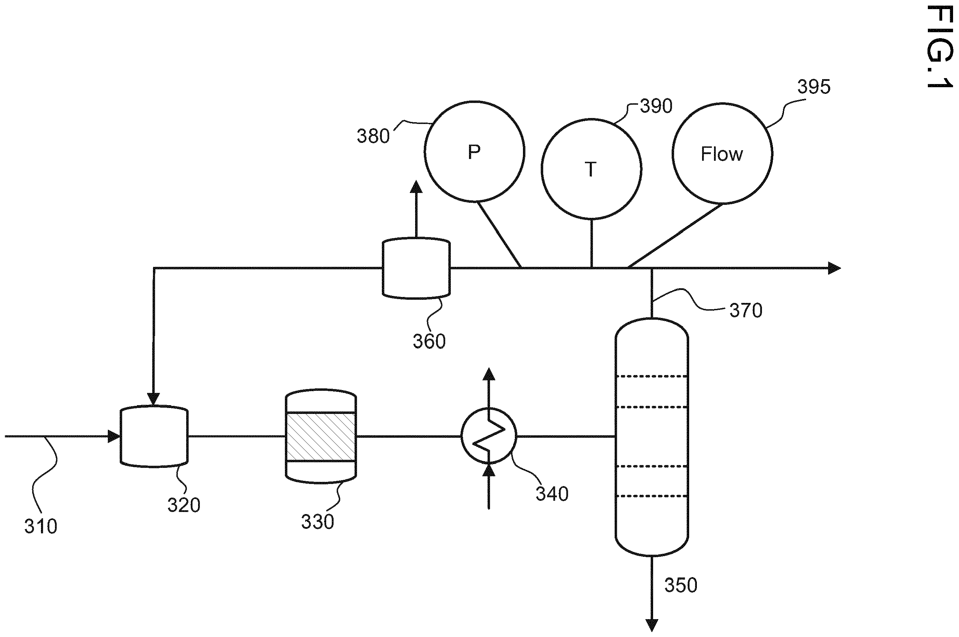

Fig. 1 shows a simplified flow chart of chemical plant. This simple flow chart is a digital process representation of a chemical plant as an example. This plant can be a simplified ammonia production plant. A product supply 310 provides educts to a mixer 320, a pipe system 330 then transports a stream of mixed educts to a reactor 340, where a reaction takes place. A heat exchanger 340 liquifies a reaction product prior to separation. After the reaction Amonia is separated from residuals, in a separator 350. The product is provided to a transportation system via product pipe 350. The residual is provided to a splitter via residual pipe 370, which provides a portion of the residual back to the mixer 320 and another part of the residual is provided to a further location. In this example a temperature sensor 180 detecting temperature T, a pressure sensor 390 detecting pressure P and a volume flow sensor 395 detecting a flow F are provided on residual pipe 370.

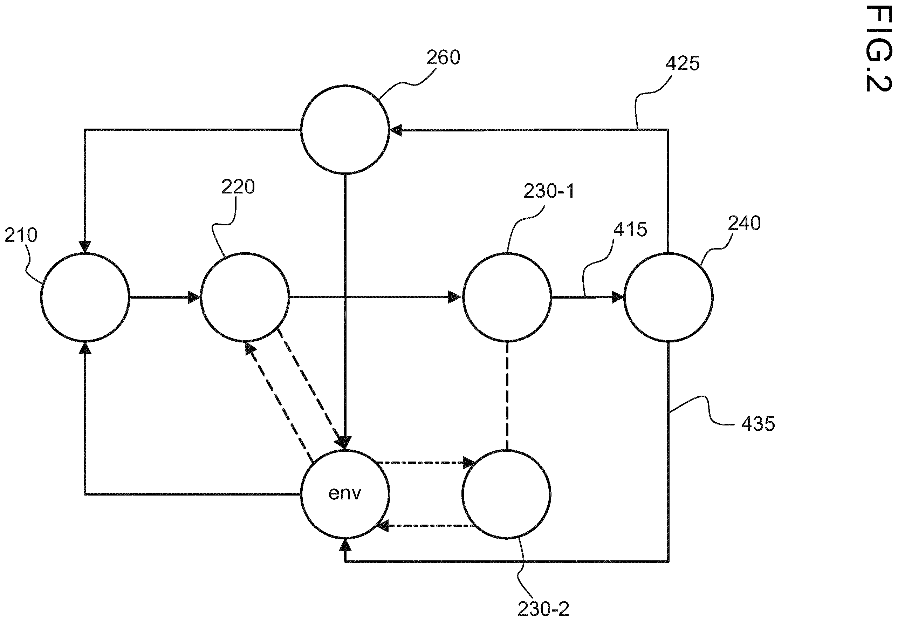

Fig 2 shows a graph structure of the first plant of Fig. 1. Each vertex 2xx in this graph structure represent a unit operation e.g. of Fig. 1. Vertex 210 represents unit operation of the mixer 120, vertex 220 represents unit operation of the reactor 340, vertex 320 represents unit operation of the heat exchanger 340, vertex 240 represents unit operation unit operation of the separator and vertex 250 represents unit operation unit operation of the splitter. An additional vertex 260 - the environment vertex - is added to the graph structure. This vertex serves as a sink and as a source and secures that the graph structure represents a self-contained system. Describing a plant as a self-contained system has the advantage that the conservation rules of physics apply.

The vertices are linked or coupled by edges. The edges represent at least one physico-chemical quantities and metadata representing at least one physico-chemical quantities and a measurable tag. In case of the edges 415, 425, 435 around the vertex 240 these physico-chemical quantities indicate that the total mass flow going into vertex 240 which is represented as a selected physico-chemical quantity on edge 415 is equal to the sum of mass flows represented by edges 425 and 435 going out of vertex 240.

One physico-chemical quantity represented in the meta data of edge 415 is the total mass flow into unit operation 240. One physico-chemical quantity represented in the meta data of 435 is the mass of NH3 going out of unit operation 240. One physico-chemical quantity represented in the meta data of edge 425 is the mass of the combined residual in this example N2 and H2. Further physico-chemical quantities included in represented in the meta data of edge 425 are values from the temperature sensor, the pressure sensor 190 and the flow sensor 195, namely pressure P, temperature T und volume flow F of the residual.

The meta data also include a measurable tag. On edge 425 P,T and F will be tagged measurable as they can be detected by the sensors 180, 190, 195. Thus, these parameters are observable. In other words with measurements of P, T and F can be used in the monitoring and/or controlling of assets and/or equipment in the chemical plant.

A further physico-chemical relation that is represented by the edge 425 is the relation that the mass flow for the residual can be determined from pressure P, temperature T and flow F.

Under this condition only one of the mass flows represented by edge 415 and edge 435 have to be measured to determine the other.

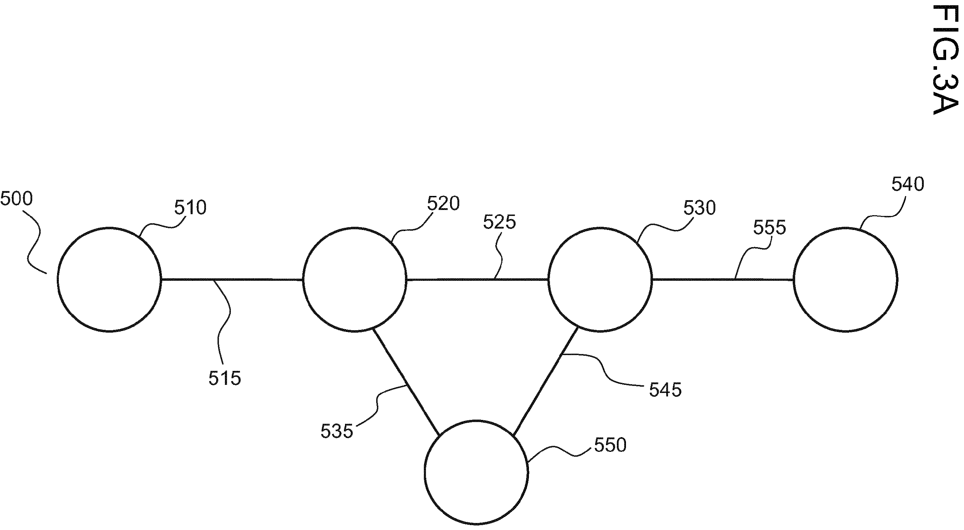

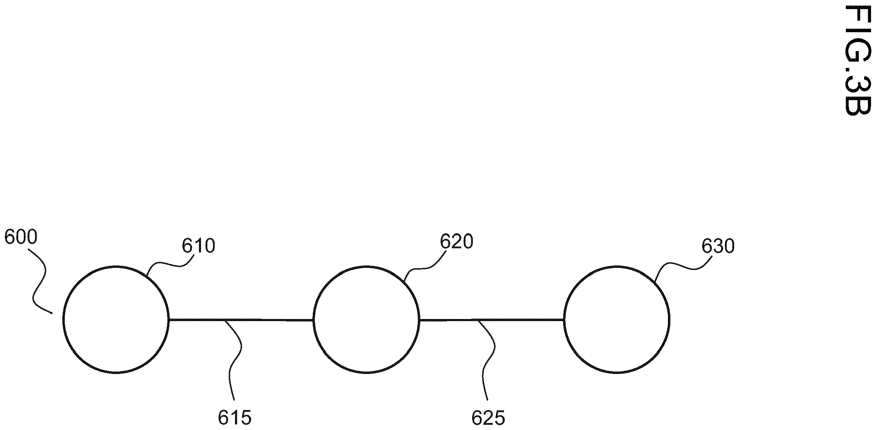

Figs 3A and 3B show an alternative graph structure the graph structure where only one physico-chemical quantity can be measured and/or determined on the edges 515, 555. The other physico-chemical quantities can not be determined or measured and thus remain unknown on edges 525, 535, 545.

Dependent on the physico-chemical quantity starting from an identical graph structure 400 and 500 then a collapsed graph structure 600 is generated, which only contains edges, where the physico-chemical quantity is observable. In other words all other edges (525, 545, 535) are not included in the collapsed graph structure. A collapsed graph structure is thus a graph structure where all edges are observable.

Unit operations in a chemical plant may represent columns, reactors, pumps, heat exchangers, cristallers, and other known pieces of equipment that may be installed in a plant. Unit operations may further comprise transports, transports define connections between plants, transports may comprise (pipes, ships, trucks, trains, for lifts, or any means moving matter between unit operations).

A model for the process step or operation of a specific unit operation may be reflected in the corresponding vertex. This model may be a rigorous model, a simple function or a data driven model or a hybrid model. These models may require physical quantities linked to the respective unit operation as input parameters. In particular chemical reactions may occur in unit operations and the chemical reaction may be modeled. A process network of two connected chemical plants may comprise at least one unit operation where a reaction occurs, the corresponding vertex may comprise a model transforming physico-chemical quantities from one connected edge to physico-chemical quantities on another connected edge.

By providing vertices that represent vertices meta data comprising physical quantities linked to the respective unit operation the input parameters for the models related to the process step of the respective unit operation are provided in a very efficient way. Access is accelerated, because the graph structure is self-containing, such that it contains that relevant information.

In the graph structure edges are linking unit operations. The edges may represent at least physico-chemical quantities. Representing at least physico-chemical quantities may comprise flow of conserved physico-chemical quantities in and out of unit operations. Conserved physico-chemical quantities are physico-chemical quantities are physico-chemical quantities following a conservation law. Another term may be conservation quantities. Physico-chemical quantities may also comprise variables as well as constraints. Conserved quantities may relate to quantities that are conserved in a self-contained system. These may be physical conserved quantities like e.g. total mass flow, energy flows and component flows. Conserved quantities may relate to quantities where conservation can be derived from physical laws. Furthermore, constitutive equations relate conserved quantities and the knowledge that along an edge these quantities are not changed, e.g. the sum of concentrations equals one. Consequently, the edges may further comprise constitutive laws.

A component flow relates to the mass flow of a certain component in a process network. For example, when a reaction including two components x and y results in a new component z, the total mass flow into a reactor is mass total =mass_x + mass_y, while component flow for x is mass_x. The total mass flow may be for example understood as the sum of all component flows.

Edge metadata may also be comprised on each edge. Edge metadata may comprise physico-chemical quantities and may be provided as signals. Physico-chemical quantities may further comprise physico-chemical quantities required to fully describe a conserved physico chemical quantity. Physico-chemical quantities may comprise temperature, pressure, weight, mass, energy, concentrations, concentrations, activity.

A measurable tag may be provided to each physico-chemical quantity on edges, when the physico-chemical quantity may be measured in the process network by a sensor, the tag may be "measured", when the physico-chemical quantity may not be measured, no tag may be associated or a tag "un-known" may be associated. Measured physico-chemical quantities may be provided directly from a sensor signal or may be derived from a sensor signal by expert knowledge or an expression. The physico-chemical quantity may be provided offline or online.

In other words, the physico-chemical quantity will be available in the process network either from inline measurements as data from a sensor, offline data, e.g. lab data, expert knowledge or an expression.

A physico-chemical quantity may be considered observable, when the selected physi-co-chemical quantity may be measured in the process network, may be calculated from balance equations around a vertex or may be measured and calculated.. A physical quantity is considered calculated if the value can be derived from other measured physico-chemical quantities by laws of physics. Balance equations are based on conservation laws of the respective physico-chemical quantity

Now, a set of balance equations derived from the graph structure is solvable and as such the graph structure allows to extract balance equations for any specific problem. This greatly reduces complexity of the digital representation. This reduced representation is problem specific, because the collapsed graph only contains problem specific physico-chemical quantities. This enables controlling or monitoring a process network with at least two interconnected chemical plants. Without reduction to a set of balance equations that fully describe the plant network and providing these equations and physico-chemical quantities controlling and monitoring would not be possible. Computation times are greatly reduced, because only balance equations need to be solved. This further allows to describe the complex plant network in a digestible way, such that prediction and production planning is enabled.

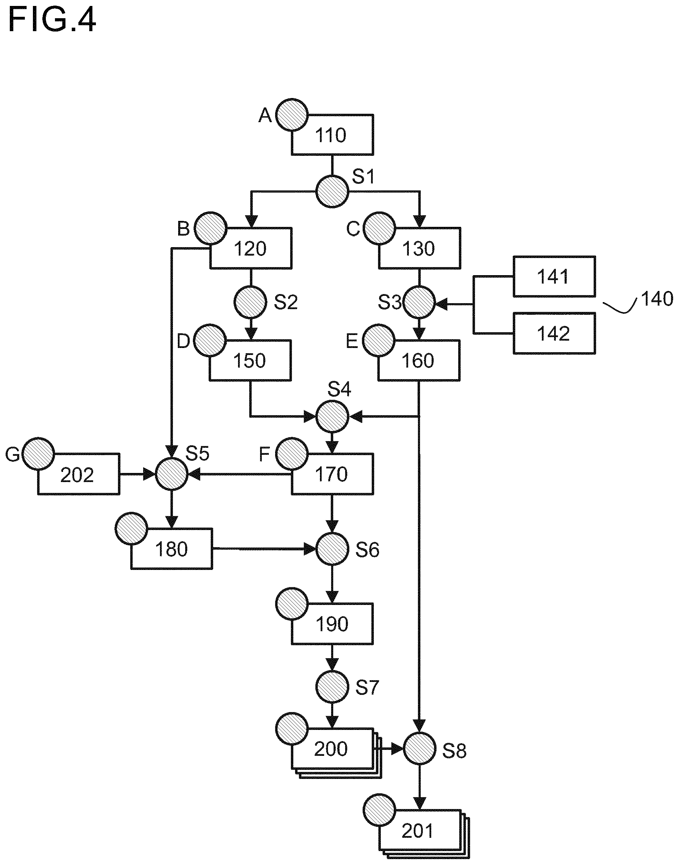

Fig. 4 shows a flow chart of a template model deployment during a monitoring of a chemical plant. A chemical plant or network of chemical plants 100 can be mapped to a graph structure 110. Via a query model context, step S1 from the graph structure 110, the structure of the asset network and available data sources can be obtained and signals 130 from signal providers inside the graph structure 110 can be obtained. The signals 130 can collect knowledge and available observations, step S3 for example from expert systems or expert knowledge 141, 142. In an observability graph 150, the observable data sources from the asset network 120 are determined. In step S4, an observability run can be performed based on information from the observability graph 150 and the observation unit 160 to achieve a converged observability 170. Here, all observable data sources or signals are provided. In other words, those data signals or data sources or signals that are not observable are not provided in the converged observability.

A model template 202 can be provided for at least one of the unit operations (as vertex) in the graph structure. The model template describes requirements in terms of available observable variables at the boundaries as well as an asset class or graph structure it relates to. In order to deploy the model correctly, the model must be provided with the correct data sources or parameters. The model can be deployed behind a standardized API.

In step S5, it is determined whether the template model can be deployed, i.e. whether all input information is observable. In step S6, the equation system is generated and destructured. A constraint graph 190 is provided and in step S7, a constraint graph is determined. A system model 200 receives the information from the constraint graph and in step S8, the models are evaluated based on the observation data and as a results insight 201 can be provided.

The observability graph can be initialized based on the asset network 120 with all variables labelled as unclassified. Observations can be added to the graph as a mechanism to update the labels.

The model template 202 describes its requirement to calculate the model or to deploy the model. These relate to available or observable variables at its boundary as well as an asset class or graph structure to which it relates to. Optionally, the models of the model template can be deployed behind an API.

The plant graph structure 110 serves to provide the structure of the plant, namely the asset network as well as the available sources, namely the signals 130. The observability graph can be used as a stage representation of a chemical plant.

Optionally, signals from the graph structure may comprise meta data like a location or type of measurement. To evaluate an observability at a point of time, it must be determined if a specific observation is available. In case such an observation is based on a measurement in the plant, the underlying sensor may be faulty decommissioned or not available currently. The observations as well as the values of the observations can be retrieved based on signals and signal providers.

In order to converge the observability graph, currently available and active observations can be added to an observation graph and the observability analysis is run. In the observability analysis, all variables within the observability graph are labelled. Thus, no more unclassified labels are present. A template model can be automatically deployed as soon as the required input is available.

The converged observability graph contains information for all available states on the network. In order to determine a state, it must be assumed that the full equation system underlying the observability analysis must be solved. However, in some cases, only part of the network state is required to deploy the desired model. The constraint graph can relate to a bi-partie graph containing variables and constraint nodes. Moreover, edges denoting which variable occur within the constraint may be available. Optionally, subgraphs which denote a minimal equation system to solve the requirement inputs for the model can also be found.

Each of the templated models have a predefined API, i.e. with a specific input. To deploy the templated models, observations in the system are collected and the state model generated from the observability is applied to compute all required observable but not measured states. Thereafter, all states are available which are required to evaluate the deployed models and to invoke the respective model API to get the desired results.

According to an aspect, an automatic deployment of template models can be performed as soon as the available is received from the observability analysis.

The plant graph structure can be used to identify all specific unit operations like a heat exchanger within the graphs.

In the context of the present invention a plant may refer any facility in which a particular product is made or power is produced. In the context of the present invention chemical plant refers to any manufacturing facility based on chemical processes, e.g. transforming a feedstock to a product using chemical processes. In contrast to discrete manufacturing, chemical manufacturing is based on continuous or batch processes. As such monitoring and/or controlling of chemical plants is time dependent and hence based on large time series data sets. A chemical plant may include more than 1.000 sensors producing measurement data points every couple of seconds. Such dimensions result in multiple terabytes of data to be handled in a system for controlling and/or monitoring chemical plants. A smallscale chemical plant may include a couple of thousand sensors producing data points every 1 to 10s. For comparison a large-scale chemical plant may include a couple of ten- thousand sensors, e.g. 10.000 to 30.000, producing data points every 1 to 10s. Contextualizing such data results in the handling of multiple hundred gigabytes to multiple terabytes.

Chemical plants may produce a product via one or more chemical processes transforming the feedstock via one or more intermediate products to the product. Preferably a chemical plant provides an encapsulated facility producing a product, that may be used as feedstock for the next steps in the value chain. Chemical plants may be large-scale plants like oil and gas facilities, gas cleaning plants, carbon dioxide capture facilities, liquefied natural gas (LNG) plants, oil refineries, petro-chemical facilities or chemical facilities. Upstream chemical plants in petro chemicals process production for example include a steamcracker starting with naphtha being processed to ethylene and propylene. These upstream products may then be provided to further chemical plants to derive downstream products such as polyethylene or polypropylene, which may again serve as feedstock for chemical plants deriving further downstream products. Chemical plants may be used to manufacture discrete products. In one example one chemical plant may be used to manufacture precursors for polyurethane foam. Such precursors may be provided to a second chemical plant for the manufacture of discrete products, such as an isolation plate comprising polyurethane foam.

The value chain production via various intermediate products to an end product can be decentralized in various locations or integrated in a Verbund site or a chemical park. Such Verbund sites or chemical parks comprise a network of interconnected chemical plants, where products manufactured in one plant can serve as a feedstock for another plant.

Chemical plants may include multiple assets, such as heat exchangers, reactors, pumps, pipes, distillation or absorption columns to name a few of them. In chemical plants some assets may be critical. Critical assets are those, which when disrupted critically impact plant operation. This can lead to manufacturing processes being compromised. Reduced product quality or even manufacturing stops may the result. In the worst-case scenario fire, explosion or toxic gas re- lease may be the result of such disruption. Hence such critical assets may require more rigorous monitoring and/or controlling then other assets depending on the chemical processes and the chemicals involved. To monitor and/or control chemical processes and assets multiple actors and sensors may be embedded in the chemical plant. Such actors or sensors may provide process or asset specific data relating to e.g. the state of an individual asset, the state of an individual actor, the composition of a chemical, or the state of a chemical process. In particular, process or asset specific data include one or more of the following data categories: process operation data, such as composition of a feedstock or an intermediate product, process monitoring data, such as flow, material temperature, asset operation data, such as current, voltage, and asset monitoring data, such as asset temperature, asset pressure, vibrations.

A single unit device or system may fulfil the functions of several items recited in the claims. The mere fact that certain measures are recited in mutually different dependent claims does not indicate that a combination of these measures cannot be used to advantage. Procedures performed by one or several units or devices can be performed by any other number of units, devices or systems. These procedures can be implemented as a program code means of a computer program and/or as dedicated hardware. A computer program product may be stored/distributed on a suitable medium such as an optical storage medium or a solid state medium supplied together with or as part of other hardware but may also be distributed in other form such as via the internet or other wired or wireless telecommunication systems.

Any reference signs in the claims should not be constructed as limiting the scope.

### List of reference signs

- 100: chemical plant
- 110: graph structure
- 120: asset network
- 130: signals
- 140: expert operation
- 141: expert knowledge
- 142: expert system
- 150: observability graph
- 160: observation
- 170: converged observability
- 180: deployment model template
- 190: constraint graph
- 200: system model
- 201: insight
- 202: model KPI template

- A: Verbund graph
- B: asset network
- C: Signals
- D: Observability graph
- E: Observation
- F: Observability graph
- G: Model/KPI template

## Claims

1. A method of monitoring at least one chemical plant (100) comprising a plurality of unit operations, wherein the chemical plant (100) together with the unit operations are mapped to a graph structure (110) having a plurality of vertices and edges coupling adjacent vertices, wherein at least one model (200) is associated to at least one of the unit operations and the associated vertices, wherein the model requires at least one input, comprising the steps of:
determining which data sources and/or parameters are available in the graph structure (110),
determining which of the models (200) requires the available data sources and/or parameter, and
automatically deploying those models (200) for which the required input is available.

2. A method of claim 1, comprising the step:
performing an observability analysis on the elements of the graph structure (110) to determine which data sources and/or parameters are available.

3. A method of claim 1 or 2, wherein
the model is used to determine key performance indicators (KPI) of the unit operation being modelled by the model.

4. A method according to any one of the claims 1 to 3, wherein
the model of the unit operation is run on a vertex associated to unit operation.

5. A method according to any one of the claims 1 to 4, wherein
the edges in the graph structure (110) relate to a physical-chemical quantity, wherein the physical-chemical quantities may comprise variables and/or constraints.

6. A method according to claim 5, wherein
a physical-chemical quantity is observable when it can be measured in the chemical plant (100), can be calculated from equations related to the vertex or may be derived from other measurements.

7. A system for monitoring at least one chemical plant (100) comprising a plurality of unit operations wherein the chemical plant (100) together with the unit operations are mapped to a graph structure (110) having a plurality of vertices and edges coupling the vertices, wherein at least one model (200) is associated to at least one of the unit operations and the associated vertices, wherein the model requires at least one output,
wherein it is determined which data source and/or parameters are available in the graph structure,
wherein it is determined which of the models requires the available data sources and/or parameters and
wherein those models are automatically deployed for which the required input is available.

8. Computer program for monitoring at least one chemical plant, the program comprising code means for causing the system according to claim 7 to execute the method according to any one of the claims 1 to 6, when the program is run on a computer controlling the system.
